# EUROPEAN PATENT APPLICATION

(11) **EP 4 075 301 A1**
(43) Date of publication of application: **19.10.2022**
(21) Application number: 22158226.5
(22) Date of filing: 23.02.2022
(51) Int. Cl.: G06F 16/9038, G06N 3/00

(54) **EVALUATION DEVICE, EVALUATION METHOD, PROGRAM, AND STORAGE MEDIUM**

(30) Priority: 12.04.2021 JP 2021067322
(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: TSUZUKI, Yoshiyuki, Minato-ku, Tokyo (JP); OHIRA, Hidetaka, Minato-ku, Tokyo (JP); TAKAHASHI, Shintarou, Minato-ku, Tokyo (JP); SAKURADA, Akihiro, Minato-ku, Tokyo (JP); CHO, Kenta, Minato-ku, Tokyo (JP)
(74) Representative: Hoffmann Eitle

(57) **Abstract**

An evaluation device according to an embodiment includes an acquirer, a first evaluator, a second evaluator, and a display controller. The acquirer acquires a training model that is an evaluation target and evaluation data. The first evaluator evaluates a functional quality of the training model based on output data acquired by inputting the evaluation data to the training model. The second evaluator evaluates a non-functional quality of the training model based on the output data. The display controller outputs an evaluation result screen including a first evaluation result according to the first evaluator and a second evaluation result according to the second evaluator to cause a display device to display the evaluation result screen.

## Description

### FIELD

Embodiments of the present invention relate to an evaluation device, an evaluation method, program, and a storage medium.

### BACKGROUND

Development of products and services using models generated through machine learning such as deep learning has progressed in various industrial fields in recent years. Researches on techniques for evaluating qualities of generated models have progressed as well.

The quality required of the models generated by machine learning varies depending of the field of use, usage conditions, and other factors. Evaluations in various points of view are necessary in order to secure quality of a model. For example, a plurality of evaluations such as an evaluation for an accuracy of a model, an evaluation for resistance to noise having a possibility of being mixed into input data, and the like are necessary. However, in an evaluation technique in the related art, evaluations from such various points of view are individually performed, and thus, an evaluator needs to individually check a plurality of evaluation results.

Usually, models generated by machine learning are subjected to an iterative training process to meet evaluation criteria. For adaptation to changes in an operating environment and the like, a model may be updated by performing a re-training process. Evaluation points of view include how to proceed with the training process, how to select training data, and how to select the best model from among multiple models generated, and thus, an evaluation technique for comprehensively performing an evaluation from various points of view has been required.

### BRIEF DESCRIPTION OF THE DRAWINGS

FIG. 1 is a functional block diagram showing an example of a functional configuration of an evaluation device 1 according to a first embodiment.
FIG. 2 is a functional block diagram showing an example of a detailed functional configuration of a second evaluator 105 according to the first embodiment.
FIG. 3 is a flowchart showing an example of the flow of an evaluation process performed by the evaluation device 1 according to the first embodiment.
FIG. 4 is a diagram showing an example of a first non-functional index value calculated by the second evaluator 105 according to the first embodiment.
FIG. 5 is a diagram showing an example of a second non-functional index value calculated by the second evaluator 105 according to the first embodiment.
FIGS. 6A and 6B are diagrams showing examples of a conversion process performed by a converter 205 according to the first embodiment.
FIG. 7 is a diagram showing an example of an evaluation result screen according to the first embodiment.
FIG. 8 is a diagram showing another example of an evaluation result screen according to the first embodiment.
FIG. 9 is a flowchart showing an example of the flow of an evaluation process performed by an evaluation device 1 according to a second embodiment.
FIG. 10 is a diagram showing an example of an evaluation result screen according to the second embodiment.
FIG. 11 is a flowchart showing an example of the flow of a re-training performing process performed by the evaluation device 1 according to the second embodiment.
FIG. 12 is a flowchart showing an example of the flow of an operation performing process performed by the evaluation device 1 according to the second embodiment.
FIG. 13 is a diagram showing an example of an evaluation result screen according to a third embodiment.

### DETAILED DESCRIPTION

Hereinafter, an evaluation device, an evaluation method, a program, and a storage medium according to embodiments will be described with reference to the drawings.

An evaluation device according to an embodiment includes an acquirer, a first evaluator, a second evaluator, and a display controller. The acquirer acquires a training model that is an evaluation object and evaluation data. The first evaluator evaluates a functional quality of the training model based on output data acquired by inputting the evaluation data to the training model. The second evaluator evaluates a non-functional quality of the training model based on the output data. The display controller outputs an evaluation result screen including a first evaluation result of the first evaluator and a second evaluation result of the second evaluator to cause a display device to display the evaluation result screen.

### (First embodiment)

An evaluation device according to a first embodiment performs an evaluation of quality of a trained model generated through machine learning (hereinafter referred to as a "training model"). The evaluation device 1 performs an evaluation of a non-functional quality of a training model in addition to an evaluation of the functional quality of the training model and causes a display device to comprehensively display evaluation results acquired from such various points of view.

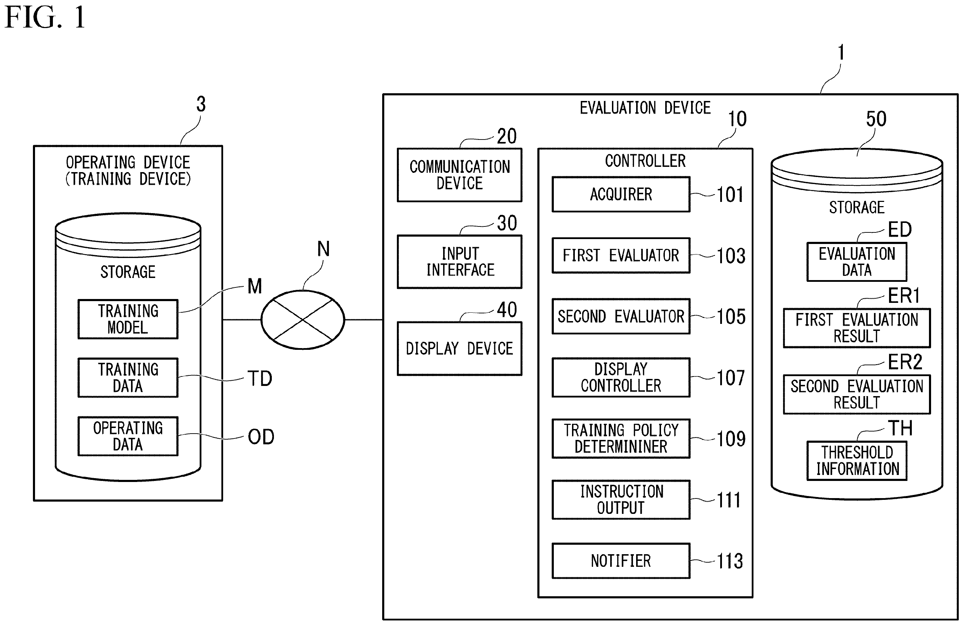

FIG. 1 is a functional block diagram showing an example of a functional configuration of the evaluation device 1 according to the first embodiment. In FIG. 1, for description, one or more operating devices (training devices) 3 communicatively connected to the evaluation device 1 through a network N are also shown.

The operating device 3 realizes a desired function using a training model in an operating stage. The operating device 3, for example, is an inspection device that performs various inspections in a factory, a control device that performs control of automatic driving of a vehicle, a robot, or the like, an image recognition device that recognizes various images, or the like. The operating device 3 stores a training model M, training data TD used in a training process of the training model M, operating data OD that is acquired and generated in an operating process using the training model M, and the like in a storage. On the other hand, in a training stage, by training with respect to training data TD, the operating device 3 operates as a training device generating a training model M. In the case of supervised training, the training data TD includes a plurality of pieces of data that is a set of input data and output data (correct answer data) for the input data. In the case of unsupervised training, the training data TD includes a plurality of pieces of input data of various patterns.

The network N, for example, includes a wide area network (WAN), a local area network (LAN), the Internet, a dedicated line, and the like.

The evaluation device 1, for example, includes a controller 10, a communication device 20, an input interface 30, a display device 40, and a storage 50. The controller 10, for example, includes an acquirer 101, a first evaluator 103, a second evaluator 105, a display controller 107, a training policy determiner 109, an instruction output 111, and a notifier 113.

The acquirer 101 acquires at least one training model M that is an evaluation target from the operating device 3 through the communication device 20. The acquirer 101 may acquire a training model M based on an operation of a user of the evaluation device 1 through the input interface 30. In addition, the acquirer 101 acquires evaluation data used for evaluating the training model M through the input interface 30. The evaluation data, for example, includes a plurality of sets of input data and output data (correct answer data) for the input data. The evaluation data is data that is different from the training data. In addition, the acquirer 101 may acquire evaluation data by reading evaluation data ED stored in the storage 50 in advance from the storage 50. Alternatively, the acquirer 101 may set the operating data OD acquired from the operating device 3 through the communication device 20 as evaluation data. In other words, the acquirer 101 acquires a training model that is an evaluation target and evaluation data. The acquirer 101 is one example of an "acquirer."

The first evaluator 103 (hereinafter, also referred to as a "first index value calculator") evaluates a functional quality of a training model and stores an evaluation result (hereinafter, referred to as a "first evaluation result ER1") in the storage 50. The functional quality is an accuracy of a function and, for example, includes an accuracy of an output result of a training model (a correct answer rate of an inference result). For example, the first evaluator 103 calculates a first index value indicating an accuracy of a training model based on whether or not an output result acquired by inputting input data included in evaluation data to the training model and output data (correct answer data) included in the evaluation data match each other. In other words, the first evaluator 103 evaluates a functional quality of a training model based on output data acquired by inputting evaluation data to the training model. The first evaluator 103 calculates a first index value representing the functional quality. The first evaluator 103 is one example of a "first evaluator."

The second evaluator 105 evaluates a non-functional quality of a training model and stores an evaluation result (hereinafter, referred to as a "second evaluation result ER2") in the storage 50. The non-functional quality includes various characteristics other than the functional quality (the accuracy of a function) described above. The non-functional quality, for example, includes characteristics based on robustness, fairness, sufficiency of training data, coverage of training data, uniformity of training data, and compatibility according to re-training.

Robustness is a characteristic for stably achieving performance even when there is a certain change in input data. Robustness, for example, represents a degree of achievement of desired performance also when input data is image data and noise is included in the image data, when a direction or a position of an object of interest shown in image data deviates, when lighting conditions or camera sensitivity at the time of capturing an image changes, or the like.

Fairness is a characteristic for achieving an output that is a result that is unbiased when seen by a user. The fairness represents a degree of achievement of desired performance, for example, without a result of inference of an ethnic group, a social attribute, a gender, and the like being inappropriate. The sufficiency of training data represents a degree of sufficiency of an amount of training data used in a training process in securing performance of the training model. The coverage of training data represents a degree of training data used in a training process covering all the patterns of input data assumed in operation. The uniformity of training data represents a degree of patterns of training data used in a training process being uniform without any bias. The compatibility according to re-training represents a degree of being able to reproduce performance similar to that before the re-training also after the re-training is performed for a training model.

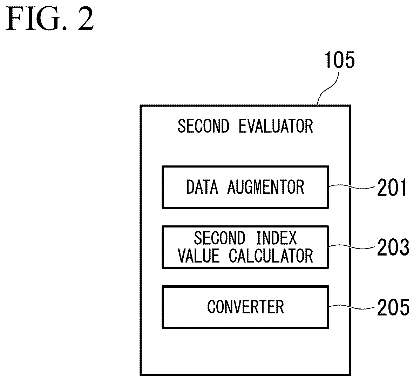

FIG. 2 is a functional block diagram showing an example of a detailed functional configuration of the second evaluator 105 according to the first embodiment. The second evaluator 105, for example, includes a data augmentor 201, a second index value calculator 203, and a converter 205. The data augmentor 201 makes a change to evaluation data, thereby generating augmented data used for evaluating the non-functional quality. For example, when robustness (noise resistance) is evaluated as non-functional quality, the data augmentor 201 generates augmented data by applying noise to input data included in evaluation data.

The noise, for example, includes noise (or white noise, hereinafter referred to as "first noise") that can be perceived (visually recognized) by a person and an adversarial perturbation (hereinafter referred to as "second noise") that cannot be perceived (not visually recognized) by a person. The first noise is noise that is generated accidentally when an operation is performed using a training model. The first noise is of such a degree that can be perceived by a person. On the other hand, the second noise is noise that is intentionally generated on vulnerability of the training model. The second noise has a minute amount of noise with a degree that cannot be perceived by a person. The data augmentor 201 generates augmented data by adding first noise or second noise to input data included in evaluation data in accordance with the purpose of an evaluation.

In other words, the converter 205 generates first augmented data by adding first noise that can be perceived by a person to evaluation data. In addition, the converter 205 generates second augmented data by adding second noise that cannot be perceived by a person to the evaluation data.

The second index value calculator 203 calculates at least one index value representing a non-functional quality of a training model (hereinafter referred to as a "non-functional index value). The non-functional index value, for example, includes a first non-functional index value representing resistance to the first noise described above, a second non-functional index value representing resistance to the second noise described above, and the like. The non-functional index value, for example, is represented using an evaluation point of view in multiple axes. Details of the process of the second index value calculator 203 will be described below. The non-functional index value is one example of a "second index value."

The converter 205 converts a non-functional index value represented by the evaluation point of view in the multiple axes calculated by the second index value calculator 203 into an index value of one axis (evaluation value). Details of the process of the converter 205 will be described below. This index value of one axis is one example of a "second index value."

In other words, the second evaluator 105 evaluates a non-functional quality of a training model based on output data acquired by inputting evaluation data to the training model. The second evaluator 105 calculates at least one second index value representing the non-functional quality. The second evaluator 105 evaluates resistance to the first noise based on output data acquired by inputting the first augmented data to a training model. The second evaluator 105 evaluates resistance to the second noise based on output data acquired by inputting the second augmented data to a training model. The second evaluator 105 converts an index value represented in multiple axes calculated based on output data into a second index value represented in one axis. The second evaluator 105 is one example of a "second evaluator."

Referring back to FIG. 1, the display controller 107 causes the display device 40 to display a first evaluation result ER1 acquired by the first evaluator 103, a second evaluation result ER2 acquired by the second evaluator 105, and the like. In addition, the display controller 107 causes the display device 40 to display a graphical user interface (GUI) used for accepting various instructions from a user of the evaluation device 1. In other words, the display controller 107 outputs an evaluation result screen including a first evaluation result acquired by the first evaluator 103 and a second evaluation result acquired by the second evaluator 105 to cause the display device 40 to display the evaluation result screen. The display controller 107 causes the display device 40 to display an evaluation result screen including the first index value and the second index value. The display controller 107 is one example of a "display controller."

The training policy determiner 109 determines a policy of re-training of the training model M based on a user's instruction through the input interface 30. Details of the process of the training policy determiner 109 will be described below. The training policy determiner 109 is one example of a "training policy determiner."

The instruction output 111 outputs a training process performing instruction according to the policy of the re-training determined by the training policy determiner 109 to the operating device 3 through the network N. The operating device 3 performs re-training of the training model M based on this training process performing instruction. In addition, the instruction output 111 outputs an instruction for performing an operating process using a designated training model based on a user' instruction made through the input interface 30 to the operating device 3 through the network N. The operating device 3 performs an operating process using the designated training model based on the instruction for performing the operating process. The instruction output 111 is one example of an "instruction output."

When the first evaluation result ER1 acquired by the first evaluator 103 or the second evaluation result ER2 acquired by the second evaluator 105 satisfies a predetermined condition for determining necessity of re-training, the notifier 113 notifies a manager of the operating device 3 or the like of occurrence of necessity of re-training. The notifier 113, for example, performs the notification described above using an electronic mail or the like. The notifier 113 is one example of a "notifier."

Each function of the controller 10 is realized by a central processing unit (CPU) (computer) executing a program. In addition, some or all of the functions of the controller 10 may be realized by hardware such as a large scale integration (LSI), an application specific integrated circuit (ASIC), a field-programmable gate array (FPGA), or the like or may be realized by software and hardware in cooperation. The program may be stored in the storage 50 (a storage device including a non-transitory storage medium) in advance or may be stored in a loadable/unloadable storage medium storage medium (a non-transitory storage medium) such as a DVD or a CD-ROM and be installed by loading the storage medium in a drive device.

The communication device 20 communicates with one or more operating devices 3 through the network N. The communication device 20, for example, includes a communication interface such as an NIC or the like.

The input interface 30 accepts various input operations from a user of the evaluation device 1 and outputs an electrical signal representing details of the accepted input operation to the controller 10. The input interface 30, for example, is realized using a keyboard, a mouse, a touch panel, or the like.

The display device 40 displays various kinds of information. For example, the display device 40 displays an evaluation result screen, a GUI that accepts various operations from a user of the evaluation device 1, and the like. The display device 40, for example, is a liquid crystal display, an organic electroluminescence (EL) display, a touch panel, or the like. In addition, the display device 40 may be provided separately from the evaluation device 1 and display various kinds of information by communicating with the evaluation device 1. Furthermore, when the display device 40 is realized using a touch panel, it may also have the function of the input interface 30 described above. The display device 40 does not necessarily need to be disposed inside the evaluation device 1. The display device 40 may be communicatively connected to the evaluation device 1.

The storage 50, for example, stores the evaluation data ED, the first evaluation result ER1, the second evaluation result ER2, threshold information TH, and the like. The storage 50 is a storage device such as a hard disk drive (HDD), a random access memory (RAM), or a flash memory.

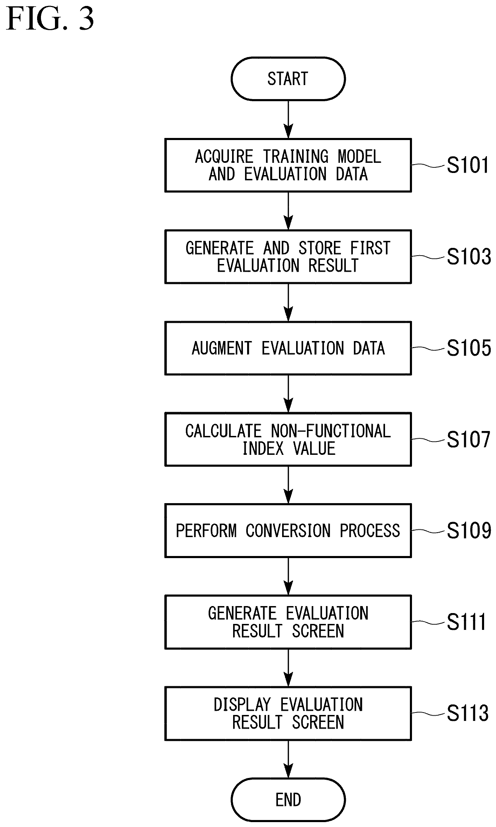

Next, an example of the process of the evaluation device 1 according to the first embodiment will be described. FIG. 3 is a flowchart showing an example of the flow of an evaluation process performed by the evaluation device 1 according to the first embodiment. The process shown in FIG. 3, for example, starts when a user of the evaluation device 1 gives an instruction for start of an evaluation process by operating the input interface 30.

First, the acquirer 101 acquires one training model M that is an evaluation target and evaluation data ED (Step S101). For example, the acquirer 101 acquires the training model M from the operating device 3 through the network N. In addition, the acquirer 101 acquires evaluation data used for evaluating the training model M through the input interface 30.

Next, the first evaluator 103 generates a first evaluation result ER1 by evaluating a functional quality of the training model M and stores the generated first evaluation result ER1 in the storage 50 (Step S103). For example, the first evaluator 103 calculates an accuracy (a correct answer rate) of an output result of the training model M using the evaluation data ED.

Next, the data augmentor 201 of the second evaluator 105 augments the evaluation data ED by making a change to the evaluation data ED, thereby generating augmented data (Step S105). For example, the data augmentor 201 adds first noise to the input data of the evaluation data ED, thereby generating first augmented data. In addition, the data augmentor 201 adds second noise to the input data of the evaluation data ED, thereby generating second augmented data.

Next, the second index value calculator 203 of the second evaluator 105 evaluates a non-functional quality of the training model M, thereby calculating a non-functional index value (Step S107). For example, the second index value calculator 203 calculates a first non-functional index value representing resistance to the first noise and a second non-functional index value representing resistance to the second noise.

In the process of calculating the first non-functional index value, the second index value calculator 203 calculates magnitude of noise for maintaining an inference result using randomized smoothing (RS) and performs quantitative indexing of the calculated value as a peak signal-to-noise ratio (PSNR; in units of decibels (dB)).

The RS is a technique for calculating a theoretical minimum value of noise changing an inference result of a training model using an expected value of an inference result (a label to be output in the case of a problem of image classification) that is output when noise is added. The second index value calculator 203 calculates magnitude of the first noise changing an inference result with a probability of 50%, for example, by applying an expected value of the inference result changing in accordance with the first noise to the RS. The calculated first noise is a minimum value for changing an inference result of which an expected value is the highest to an inference result of which an expected value is the second highest. For the first noise smaller than this minimum value, it is secured that there is no change in the inference result of which the expected value is the highest, and thus resistance to first noise can be evaluated using the value of this noise as a base.

The PSNR represents a ratio of noise to a maximum power that may be taken by a signal and is also used as an index of deterioration of image quality in irreversible image compression. The PSNR becomes infinite when noise is zero, and it becomes a smaller value when noise becomes higher. Although the PSNR does not necessarily coincide with subjective image quality of persons, when it becomes about 40 dB or less, the deterioration is perceived. By representing a minimum value of the first noise changing an inference result using the PSNR, a target value of noise resistance can be quantitively set to be easily understood.

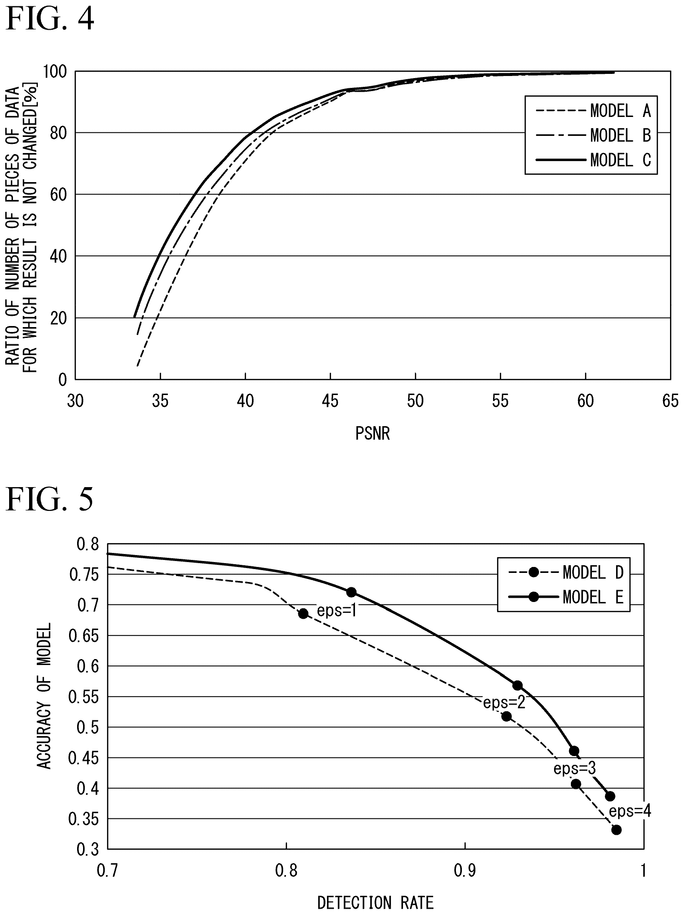

FIG. 4 is a diagram showing an example of the first non-functional index value calculated by the second evaluator 105 according to the first embodiment. The first non-functional index value is represented using two axes, including a horizontal axis representing a peak signal-to-noise ratio (PSNR in units of decibels (dB)) and a vertical axis representing a ratio of the number of pieces of data having no change in results (that is, a ratio of the number of pieces of data having no change in an inference result even in the case of adding first noise having magnitude of a PSNR value). FIG. 4 represents comparison results of noise resistance for three training models including Model A, Model B, and Model C. Model A is generated using training data that has not been processed. Model B is generated using padded data obtained by adding white noise to training data. Model C is generated similarly to Model B by setting white noise to be larger than that of Model B. Training conditions are the same in the three models.

FIG. 4 shows a graph acquired by indexing a minimum value of noise calculated for test data through RS as a PSNR and measuring noise resistance for the three models. Here, by determining not a correct answer/incorrect answer of an inference result but a change in change presence/change absence in the inference result according to noise, noise resistance is evaluated. In this case, when a training model has more data of which an inference result has no change even for a low PSNR, the noise resistance becomes higher. In FIG. 4, it can be understood that the noise resistance of Model C is the highest. In addition, an evaluation can be performed by setting a target value by referring to a PSNR value having a magnitude of a noise that can be perceived by a person, for example, "setting a target value such that 70% or more data has resistance to noise of 40 dB or more" or the like.

On the other hand, in the process of calculating the second non-functional index value, the second index value calculator 203 calculates a second non-functional index value using a detector that has trained such that it detects second noise. Since the second noise (an adversarial perturbation) is so minute that it cannot be perceived by a person, it is difficult to actually sense the magnitude thereof, and it is difficult to set a valid reference value according to an amount of noise unlike the first noise (an accidental noise). For this reason, for the second noise, another index enabling a person to easily imagine the magnitude thereof is necessary. Thus, the second index value calculator 203 uses a detector that has trained such that it detects second noise and measures a ratio of detection of second noise (hereinafter, referred to as a "detection ratio") in the detector for a data set including data to which second noise has been added (hereinafter, referred to as "adversarial data"). The detection ratio is so to speak easiness for distinguishing noise in a training model, and by forming this as an index having magnitude of the noise, a target value that may be more easily understood can be set. For example, a perturbation having a high detection ratio is a perturbation that can be easily distinguished in a training model.

FIG. 5 is a diagram showing an example of the second non-functional index value calculated by the second evaluator 105 according to the first embodiment. FIG. 5 represents comparison results of noise resistance for two training models including Model D and Model E. Model D is generated by training with respect to training data that has not been processed. Model E is generated by training data acquired by adding adversarial data generated from training data to the training data of Model D in the same training conditions as those of Model D. Model E is a model of which noise resistance is improved more than Model D. As a technique for generating adversarial data, a fast gradient method (FGM) is used. FIG. 5 shows measurement results acquired by generating detectors of such Model D and Model E and measuring detection ratios for adversarial data generated from test data and the test data that has not been processed with a magnitude of an adversarial perturbation (second noise) changed.

The second non-functional index value shown in FIG. 5 is represented using two axes including a horizontal axis representing a detection ratio of the detector for adversarial data and a vertical axis representing an accuracy of a training model for the adversarial data. In FIG. 5, eps is one of input parameters used for FGM, is a value to be multiplied to the magnitude of a generated perturbation, and is used for adjusting the magnitude of the perturbation. For this reason, when the eps is increased, the perturbation becomes larger. From the results shown in FIG. 5, a correlation between the magnitude of the second noise and the detection ratio can be checked, and it can be understood that the detection ratio can be used as an index representing the magnitude of the perturbation. From the correlation between the detection ratio and the magnitude of the perturbation, a training model having a high accuracy also for noise of which the detection ratio is high is a model having high noise resistance. As shown in FIG. 5, it can be relatively evaluated that Model E has higher noise resistance than Model D. By representing the magnitude of a perturbation using a detection ratio, each model can be evaluated by setting a target value that is quantitative and can be easily imagined by persons, for example, "an accuracy of a model being 70% or more for second noise having magnitude of which the detection ratio is equal to or lower than 0.8" or the like.

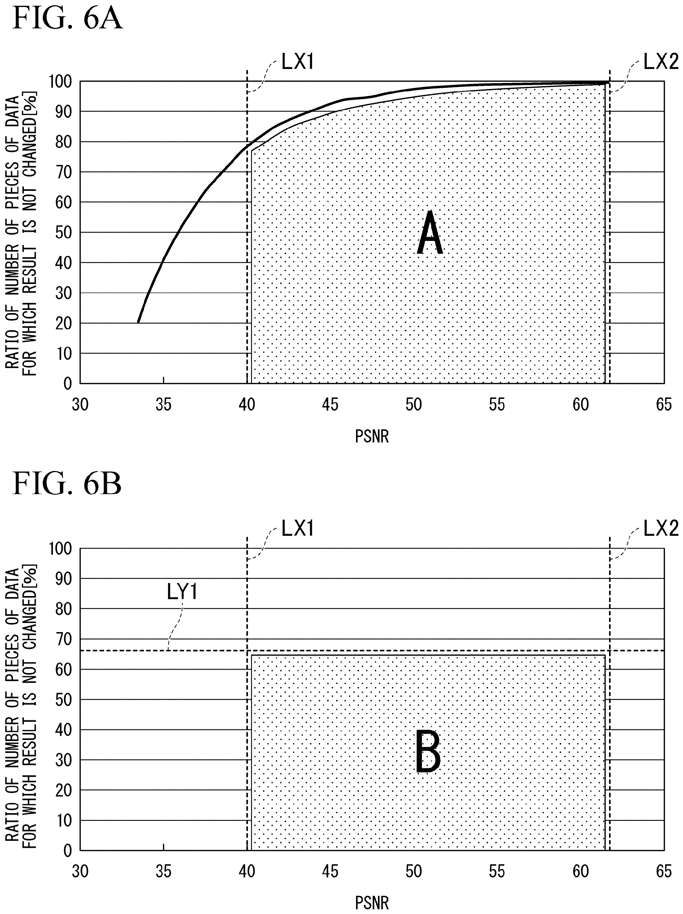

Next, the converter 205 of the second evaluator 105 converts a non-functional index value calculated by the second index value calculator 203 into an index value of one axis (Step S109). FIGS. 6A and 6B are diagrams showing examples of the conversion process performed by the converter 205 according to the first embodiment. FIG. 6A is a diagram showing an example of the conversion process for converting a first non-functional index value represented using two axes shown in FIG. 4 into an index value of one axis. In this example, as target values (a range) of the horizontal axis (PSNR) for performing an evaluation, a lower limit target value LX1 and an upper limit target value LX2 are set, and an area A under a graph curve for these target values (the range) (in other words, an area A enclosed by the lower limit target value LX1, the upper limit target value LX2, the X axis, and the graph curve) is calculated and is set as an index value of one axis.

Alternatively, as shown in FIG. 6B, A/B may be calculated as an evaluation value by setting a target value LY1 as a target value of the vertical axis (a ratio of number of pieces of data for which there is no change in the result) and calculating an area B that is a reference (in other words, an area B surrounded by the lower limit target value LX1, the upper limit target value LX2, the target value LY1, and the X axis). For example, when A ⊇ B and the evaluation value > 1, it can be regarded that the target is satisfied.

Next, the display controller 107 generates an evaluation result screen including the first evaluation result ER1 according to the first evaluator 103, the second evaluation result ER2 according to the second evaluator 105, and the like (Step S111). Next, the display controller 107 causes the display device 40 to display the generated evaluation result screen (Step S113).

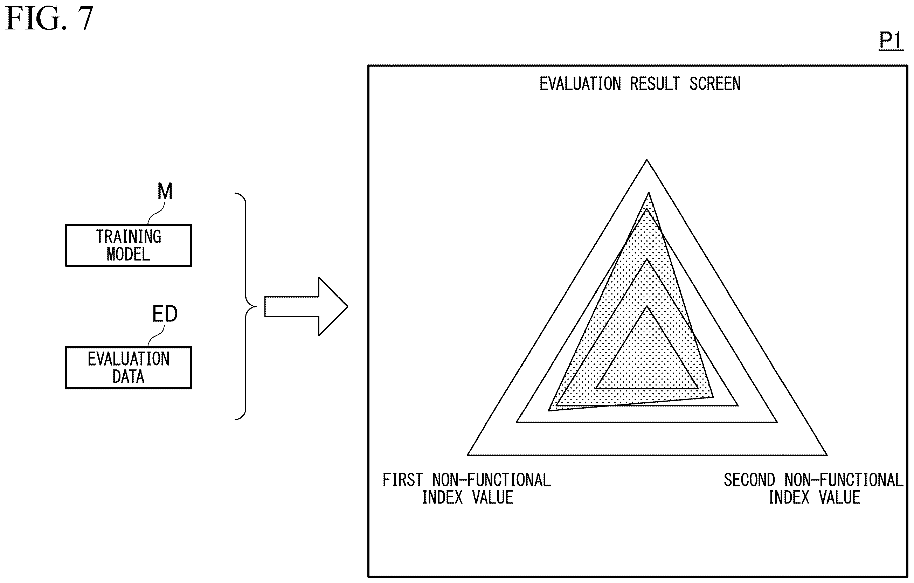

FIG. 7 is a diagram showing an example of the evaluation result screen according to the first embodiment. In an evaluation result screen P1 shown in FIG. 7, evaluation results from three points of view including an accuracy of a training model M included in the first evaluation result ER1 according to the first evaluator 103, an index value of one axis based on a first non-functional index value included in the second evaluation result ER2 according to the second evaluator 105, and an index value of one axis based on the second non-functional index value included in the second evaluation result according to the second evaluator 105 are represented in a radar chart. By checking the evaluation result screen including the evaluation results from such a plurality of points of view, a user of the evaluation device 1 can perform evaluations of a training model from various points of views.

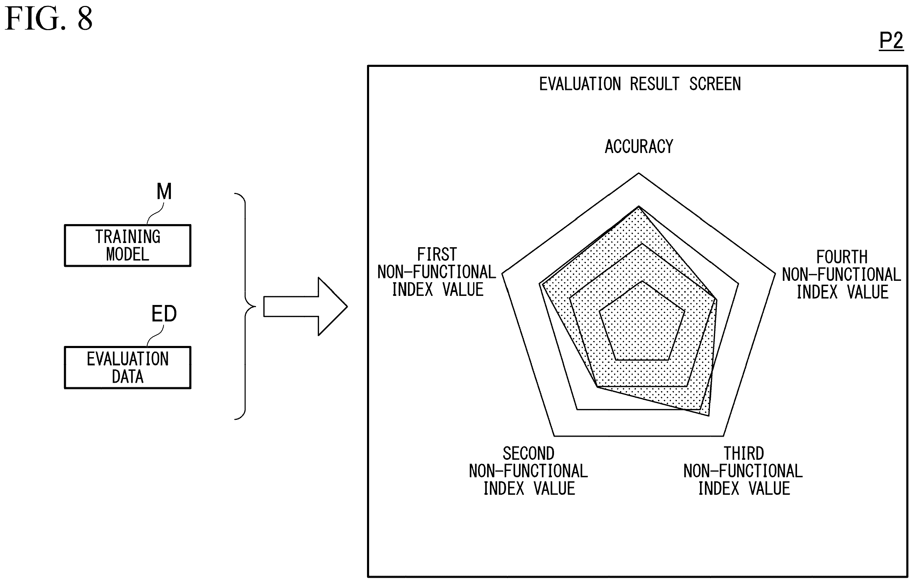

FIG. 8 is a diagram showing another example of the evaluation result screen according to the first embodiment. In an evaluation result screen P2 shown in FIG. 8, evaluation results from a total of five points of view including an accuracy of a training model M included in the first evaluation result ER1 according to the first evaluator 103 and four index values based on four non-functional index values included in the second evaluation result ER2 according to the second evaluator 105 are represented in a radar chart. By checking the evaluation result screen including the evaluation results from such a plurality of points of view, a user of the evaluation device 1 can perform evaluations of a training model from various points of view.

The number of evaluation results represented on the evaluation result screen is arbitrary as long as it is two or more types. For example, on the evaluation result screen, one functional evaluation result of a training model M included in the first evaluation result and one non-functional evaluation result included in the second evaluation result may be represented on a two-axis graph. In addition, for example, on the evaluation result screen, one functional evaluation result of the training model M included in the first evaluation result and 3 or 5 or more non-functional evaluation results included in the second evaluation result may be represented in a radar chart. Furthermore, a way of displaying results is not limited to a graph display and a radar chart display but is arbitrary as long as it can display a plurality of evaluation results in a comparable manner. In this way described above, the process of this flowchart is completed.

According to the evaluation device 1 of the first embodiment configured in this way, evaluations of a training model from a plurality of points of view can be comprehensively performed.

### (Second embodiment)

Next, a second embodiment will be described. An evaluation device 1 according to the second embodiment is different from the first embodiment in that it acquires a plurality of training models as evaluation targets and performs evaluations of the plurality of training models. For this reason, hereinafter, differences from the first embodiment will be focused on in description, and description of points common to the first embodiment will be omitted. In description of the second embodiment, the same reference signs will be assigned to the same parts as those of the first embodiment, and description thereof will be presented.

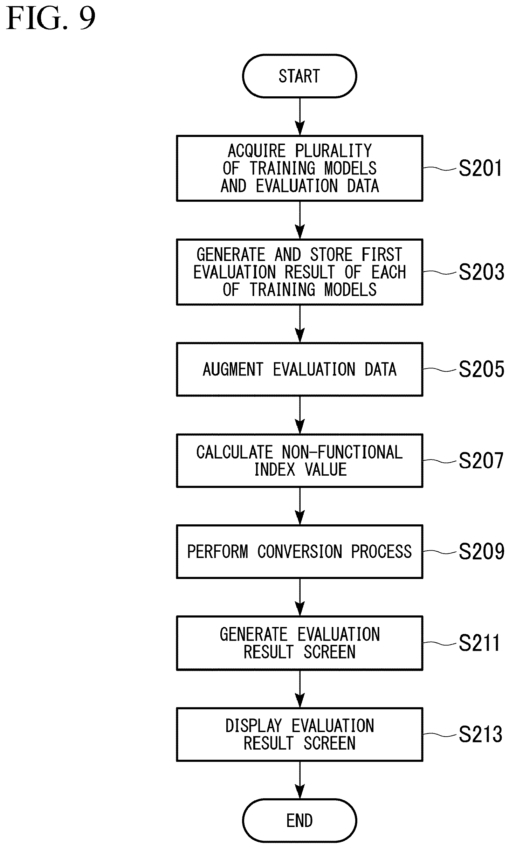

FIG. 9 is a flowchart showing an example of the flow of an evaluation process performed by the evaluation device 1 according to the second embodiment. The process shown in FIG. 9, for example, starts when a user of the evaluation device 1 gives an instruction for start of an evaluation process by operating an input interface 30.

First, an acquirer 101 acquires a plurality of training model M that are evaluation targets and one piece of evaluation data ED (Step S201). For example, the acquirer 101 acquires a plurality of training models M from an operating device 3 through a network N. Such a plurality of training models are models that are generated using different training data or models that are generated using different training methods. In addition, the acquirer 101 acquires evaluation data used for evaluating the training models M through the input interface 30.

Next, a first evaluator 103 generates a first evaluation result ER1 by evaluating a functional quality of each of the plurality of training models M and stores the generated first evaluation result ER1 in a storage 50 (Step S203). For example, the first evaluator 103 calculates an accuracy (a correct answer rate) of an output result of each of the plurality of training models M using the evaluation data ED. In other words, the first evaluator 103 evaluates a functional quality of each of the plurality of training models based on a plurality of pieces of output data acquired by inputting evaluation data to the plurality of training models.

Next, a data augmentor 201 of a second evaluator 105 augments the evaluation data ED by making a change to the evaluation data ED, thereby generating augmented data (Step S205). For example, the data augmentor 201 adds first noise to the input data of the evaluation data ED, thereby generating first augmented data. In addition, the data augmentor 201 adds second noise to the input data of the evaluation data ED, thereby generating second augmented data.

Next, a second index value calculator 203 of the second evaluator 105 evaluates a non-functional quality of each of the training models M, thereby calculating a non-functional index value (Step S207). For example, the second index value calculator 203 calculates a first non-functional index value representing resistance to the first noise and a second non-functional index value representing resistance to the second noise.

Next, a converter 205 of the second evaluator 105 converts a non-functional index value of each of the training models M calculated by the second index value calculator 203 into an index value of one axis (Step S209). In other words, the second evaluator 105 evaluates the non-functional quality of each of the plurality of training models based on a plurality of pieces of output data acquired by inputting evaluation data to each of the plurality of training models.

Next, a display controller 107 generates an evaluation result screen including a first evaluation result ER1 according to the first evaluator 103, a second evaluation result ER2 according to the second evaluator 105, and the like (Step S211). Next, the display controller 107 causes a display device 40 to display the generated evaluation result screen (Step S213).

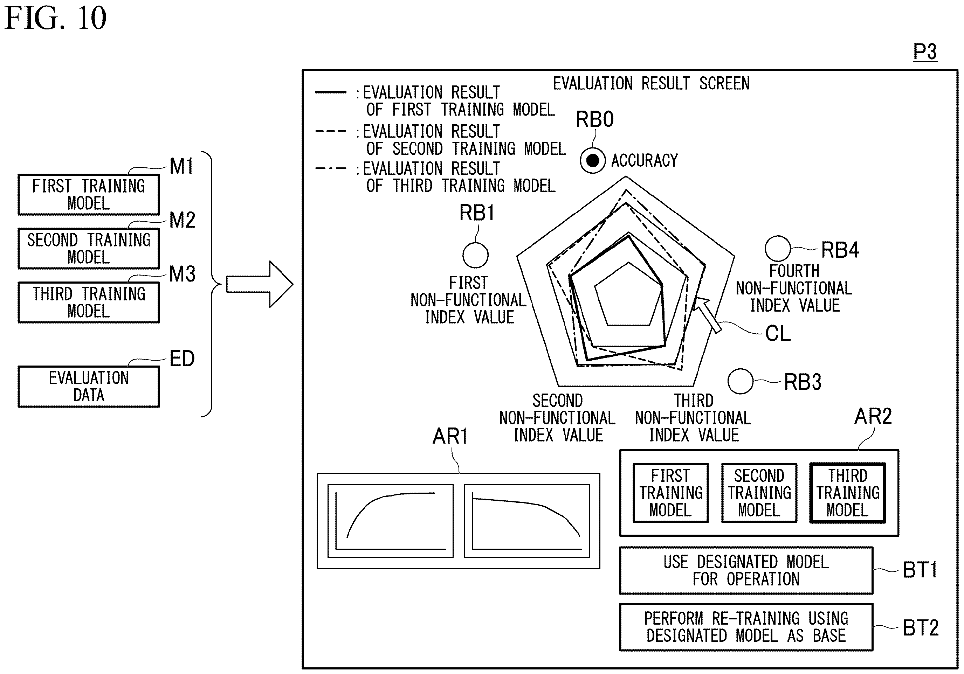

FIG. 10 is a diagram showing an example of the evaluation result screen according to the second embodiment. In an evaluation result screen P3 shown in FIG. 10, for each of three training models including a first training model M1, a second training model M2, and a third training model M3, evaluation results from a total of five points of view including an accuracy of the training model included in the first evaluation result ER1 according to the first evaluator 103 and four index values based on four non-functional index values included in the second evaluation result ER2 according to the second evaluator 105 are represented in a radar chart. On this evaluation result screen P3, evaluation results of three evaluation models are displayed in an overlapping manner. In other words, the display controller 107 causes the display device 40 to display an evaluation result screen on which evaluation results of the plurality of training models overlap each other. In addition, on the evaluation result screen P3, an area AR1 for displaying details of some or all of the evaluation results is provided. Details of a training model selected based on a user's operation through a mouse included in the input interface 30 (for example, a training model that has been clicked in the radar chart of the plurality of training models) among three training models may be displayed in the area AR1. By checking the evaluation result screen including such a plurality of evaluation results, a user of the evaluation device 1 can perform evaluations of training models from various points of views. In this way described above, the process of this flowchart is completed.

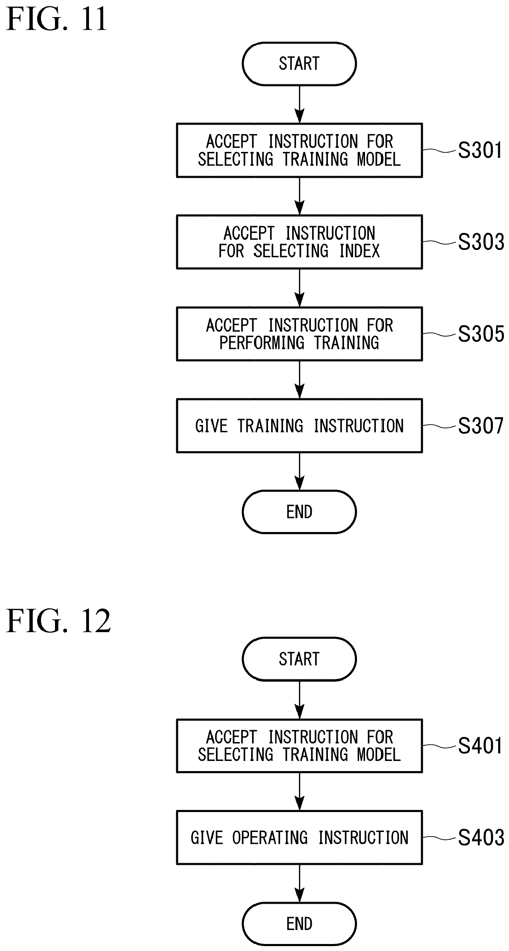

In addition, in the evaluation result screen P3 shown in FIG. 10, a function for selecting one specific training model among a plurality of training models and giving an instruction for performing re-training of the selected training model is included. Hereinafter, a process for giving an instruction for performing this re-training will be described. FIG. 11 is a flowchart showing an example of the flow of a re-training performing process performed by the evaluation device 1 according to the second embodiment.

The acquirer 101 accepts an instruction for selecting a training model that is a target for re-training based on an instruction of an operation through the input interface 30 that is performed by a user of the evaluation device 1 (Step S301). For example, by clicking (pressing) (an arrow CL) any one of a plurality of radar charts of training models displayed on the evaluation result screen P3 by operating a mouse included in the input interface 30, a user of the evaluation device 1 can give an instruction for a training model to be a target for re-training. Alternatively, by clicking (pressing) a selection button of a model displayed in an area AR2 of the evaluation result screen P3 by operating a mouse included in the input interface 30, a user can give an instruction for a training model to be a target for re-training.

Next, the acquirer 101 accepts an instruction for selecting an index based on an instruction of an operation through the input interface 30 that is performed by the user of the evaluation device 1 (Step S303). For example, by selecting any one of radio buttons RB0, RB1, RB3, and RB4 respectively displayed in association with index values on the evaluation result screen P3 by operating a mouse included in the input interface 30, the user of the evaluation device 1 can select an index to be raised at the time of re-training. In this example, a second non-functional index value is an index value that cannot be raised through re-training based on characteristics thereof, and thus no radio button is displayed therefor. The configuration is not limited to radio buttons, and, for example, a plurality of index values desired to be raised through training may be configured to be selected by displaying check boxes respectively associated with index values on the evaluation result screen P3. In addition, also when a plurality of index values can be selected, a combination of indexes that cannot be simultaneously raised may be configured not to be able to be selected. For example, an index value relating to coverage of data and an index value relating to uniformity of data are indexes that are contrary to each other, and thus this combination may be configured to be unable to be selected.

Next, the acquirer 101 accepts an instruction for performing training based on an instruction of an operation through the input interface 30 that is performed by the user of the evaluation device 1 (Step S305). For example, by clicking (pressing) a button BT2 of "re-training using a designated model as a base" displayed on the evaluation result screen P3 by operating a mouse included in the input interface 30, the user of the evaluation device 1 can give an instruction for performing re-training. The training policy determiner 109 determines a training policy based on the instruction for selecting a training model, an instruction for selecting an index, and an instruction for performing training that have been accepted as described above.

Next, the instruction output 111 outputs an instruction for performing training based on the training policy determined by the training policy determiner 109 to the operating device 3 through the network N (Step S307). The operating device 3 performs re-training of the training model M based on this instruction for performing a training process.

In other words, the evaluation result screen P3 includes a first acceptance section that accepts user's designation of at least one index value out of a first index value and a second index value. The radar chart of a plurality of training models, which can be selected, displayed on the evaluation result screen P3, selection buttons for selecting models displayed in the area AR2, and the button BT2 of "re-training using a designated model as a base" displayed on the evaluation result screen P3 represent one example of a "first acceptance section." In addition, the training policy determiner 109 determines a training policy of the training model based on the designation of an index value that has been accepted by the first acceptance section. Furthermore, the instruction output 111 outputs an instruction for performing training based on the determined training policy. In addition, the first acceptance section does not accept a user's designation of an index value of which quality cannot be improved through a training process.

In addition, on the evaluation result screen P3 shown in FIG. 10, a function for selecting one specific training model among a plurality of training models and giving an instruction for performing an operation using the selected training model is included. Hereinafter, a process for giving an instruction for performing this operation will be described. FIG. 12 is a flowchart showing an example of the flow of an operation performing process performed by the evaluation device 1 according to the second embodiment.

The acquirer 101 accepts an instruction for selecting a training model desired to be used for an operation based on an instruction of an operation through the input interface 30 that is performed by the user of the evaluation device 1 (Step S401). For example, by clicking (pressing) (an arrow CL) any one of a plurality of radar charts of training models displayed on the evaluation result screen P3 by operating a mouse included in the input interface 30, a user of the evaluation device 1 can give an instruction for a training model desired to be used for the operation. Alternatively, by clicking (pressing) a selection button of a model displayed in the area AR2 of the evaluation result screen P3 by operating a mouse included in the input interface 30, a user can give an instruction for a training model desired to be used for the operation.

Next, the instruction output 111 outputs an instruction for performing the operation using a training model based on the selection instruction that has been accepted by the acquirer 101 to the operating device 3 through the network N (Step S403). For example, by clicking (pressing) a button BT1 of "the designated model being used for the operation" displayed on the evaluation result screen P3 by operating a mouse included in the input interface 30, the user of the evaluation device 1 can perform an instruction for performing the operation. The operating device 3 starts the operation using the designated training model based on this instruction for performing the operation.

In other words, the evaluation result screen P3 includes a second acceptance section that accepts user's designation of a training model used for the operation among a plurality of training models. The radar charts of the plurality of training models, which can be selected, displayed on the evaluation result screen P3, the selection button of a model displayed in the area AR2, and the button "the designated model being used for the operation" BT1 displayed on the evaluation result screen P3 represent one example of a "second acceptance section." The instruction output 111 outputs an instruction for performing the operation using the designated training model based on the designation of the training model that has been accepted using the second acceptance section.

According to the evaluation device 1 of the second embodiment configured in this way, evaluations of a training model from a plurality of points of view can be comprehensively performed. In addition, evaluations of a plurality of training models can be performed in a comparable manner. Furthermore, by enabling an instruction for performing re-training of a training model and an instruction for performing the operation using the designated training model, an evaluation of a training model to change of a training model used for re-training of the training model or the operation can be performed, and accordingly, the user's convenience can be further improved.

### (Third embodiment)

Next, a third embodiment will be described. An evaluation device 1 according to the third embodiment is different from the first embodiment in that an evaluation of a training model is performed using two types of evaluation data including evaluation data at the time of training and evaluation data at the time of comparison. For this reason, hereinafter, differences from the first embodiment will be focused on in description, and description of points common to the first embodiment will be omitted. In description of the third embodiment, the same reference signs will be assigned to the same parts as those of the first embodiment, and description thereof will be presented.

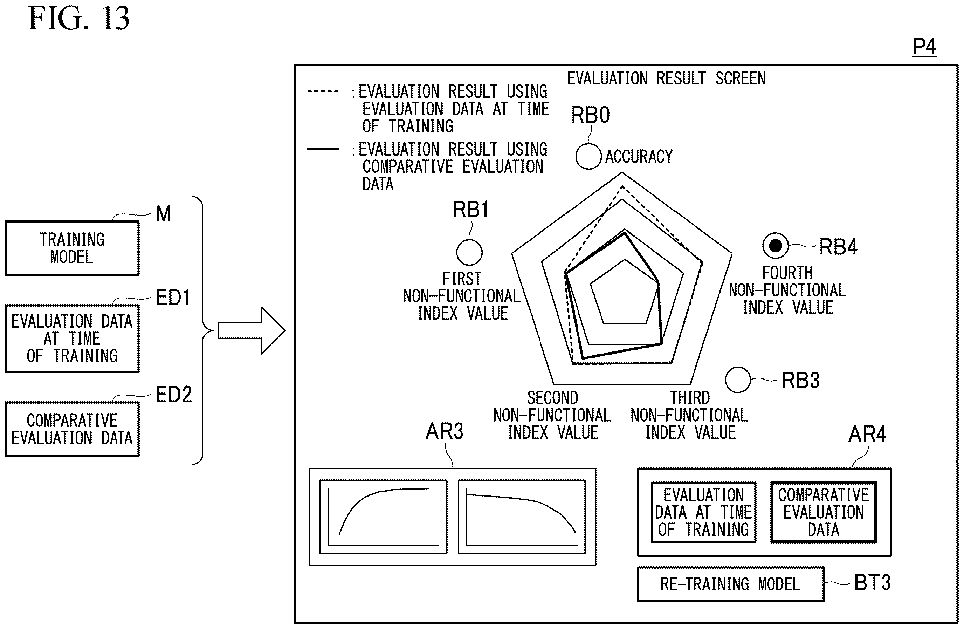

FIG. 13 is a diagram showing an example of an evaluation result screen according to the third embodiment. An evaluation result screen P4 shown in FIG. 13 is generated using one training model M, evaluation data ED1 at the time of training, and comparative evaluation data ED2 as input data. The evaluation data ED1 at the time of training is evaluation data used at the time of generating a training model M. The comparative evaluation data ED2 is data different from the evaluation data ED1 at the time of training that is separately prepared for comparison. The comparative evaluation data ED2, for example, is data with an event changed in accordance with progress of the operation of the operating device 3 taken into account. The comparative evaluation data ED2, for example, is input data for a training model M that is actually used in a latest operating process.

On the evaluation result screen P4 shown in FIG. 13, an evaluation result using the evaluation data ED1 at the time of training and an evaluation result using the comparative evaluation data ED2 are displayed in a radar chart in an overlapping manner for a training model M. In addition, on the evaluation result screen P4, an area AR3 for displaying details of some or all of the evaluation results is provided. In this area AR3, a status according to a time transition of each evaluation result is displayed. In addition, on the evaluation result screen P4, an area AR4 for accepting a selection instruction of an evaluation result displayed in the area AR3 of the evaluation result screen P4 is provided. For example, by clicking (pressing) a selection button for selecting evaluation data displayed in the area AR4 of the evaluation result screen P4 by operating a mouse included in the input interface 30, the user of the evaluation device 1 can select an evaluation result to be displayed in the area AR3. Alternatively, by clicking (pressing) any one of radar charts of evaluation results displayed on the evaluation result screen P4 by operating a mouse included in the input interface 30, the user of the evaluation device 1 can select an evaluation result to be displayed in the area AR3. In addition, on the evaluation result screen P4, a threshold (reference line) for each index value stored in the storage 50 in advance may be configured to be displayed. By checking the evaluation result screen including a plurality of such evaluation results, the user of the evaluation device 1 can perform an evaluation of a training model from various points of view.

In other words, the display controller 107 causes the display device 40 to display an evaluation result screen displaying an evaluation result using the first evaluation data used at the time of training the training model and an evaluation result using the second evaluation data, which is different from the first evaluation data, prepared at the time of comparative evaluation of the training model in a comparable manner.

In addition, in the evaluation result screen P4 shown in FIG. 13, a function for giving an instruction for performing re-training of the training model M is included. For example, by selecting any one of radio buttons RB0, RB1, RB3, and RB4 respectively displayed in association with evaluation results on the evaluation result screen P4 by operating a mouse included in the input interface 30, the user of the evaluation device 1 can select an index to be raised at the time of re-training. In addition, by clicking (pressing) a button BT3 of "re-training of the model" displayed on the evaluation result screen P4 by operating a mouse included in the input interface 30, the user of the evaluation device 1 can give an instruction for performing re-training. The training policy determiner 109 determines a training policy based on the instruction for selecting an index and an instruction for performing training that have been accepted as described above. The instruction output 111 outputs an instruction for performing training based on the training policy determined by the training policy determiner 109 to the operating device 3 through the network N. The operating device 3 performs re-training of the training model M based on this instruction for performing the training process. In addition, on the evaluation result screen P4, a configuration for accepting an instruction for selecting a type of training data to be used for re-training may be provided.

In addition, when the first evaluation result ER1 acquired by the first evaluator 103 or the second evaluation result ER2 acquired by the second evaluator 105 satisfies a predetermined condition for determining necessity of re-training, the notifier 113 notifies a manager of the operating device 3 or the like of occurrence of necessity of re-training. For example, the notifier 113 determines presence/absence of necessity for re-training by comparing at least one index value included in the first evaluation result ER1 according to the first evaluator 103 or the second evaluation result ER2 according to the second evaluator 105 with threshold information TH stored in the storage 50 in advance. The notifier 113, for example, performs the notification described above using an electronic mail or the like. In other words, when an evaluation result of the training model is below a predetermined threshold, the notifier 113 performs notification for prompting re-training of the training model.

According to the evaluation device 1 of the third embodiment configured in this way, evaluations of a training model from a plurality of points of view can be comprehensively performed. In addition, for example, by performing an evaluation using an evaluation result using the evaluation data ED1 at the time of training and the comparative evaluation data ED2, a detailed evaluation (an evaluation of presence/absence of performance degradation or the like) of the training model can be performed.

In the embodiment described above, although a configuration in which the evaluation device 1 has a display control function (the display controller 107) has been described as an example, the present invention is not limited thereto. For example, the evaluation device 1 may be a separate device in which only the function of the second evaluator 105 performing a non-functional evaluation is realized.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An evaluation device comprising:
an acquirer configured to acquire a training model that is an evaluation target and evaluation data;
a first evaluator configured to evaluate a functional quality of the training model based on output data acquired by inputting the evaluation data to the training model;
a second evaluator configured to evaluate a non-functional quality of the training model based on the output data; and
a display controller configured to output an evaluation result screen including a first evaluation result of the first evaluator and a second evaluation result of the second evaluator to cause a display device to display the evaluation result screen.

2. The evaluation device according to claim 1,
wherein:
the first evaluator calculates a first index value representing the functional quality,
the second evaluator calculates at least one second index value representing the non-functional quality, and
the display controller causes the display device to display the evaluation result screen including the first index value and the second index value.

3. The evaluation device according to claim 2, wherein the evaluation result screen includes a first accepter configured to accept user's designation of at least one of the first index value and the second index value, and
the evaluation device further comprises:
a training policy determiner configured to determine a training policy of the training model based on the user's designation of the index value accepted using the first accepter; and
an instruction output configured to output an instruction for performing training based on the determined training policy.

4. The evaluation device according to claim 3, wherein the first accepter does not accept the user's designation of an index value that is unable to improve quality through a training process.

5. The evaluation device according to any one of claims 1 to 4,
wherein:
the acquirer acquires a plurality of training models that are evaluation targets,
the first evaluator evaluates a functional quality of each of the plurality of training models based on a plurality of pieces of output data acquired by inputting the evaluation data to the plurality of training models,
the second evaluator evaluates a non-functional quality of each of the plurality of training models based on the plurality of pieces of output data, and
the display controller causes the display device to display the evaluation result screen in which evaluation results of the plurality of training models overlap each other.

6. The evaluation device according to claim 5, wherein the evaluation result screen includes a second accepter that accepts user's designation of a training model used for the operation among the plurality of training models, and
the evaluation device further comprises an instruction output configured to output an instruction for performing an operation using the designated training model based on the designation of the training model that has been accepted by the second accepter.

7. The evaluation device according to any one of claims 1 to 6, wherein the second evaluator generates first augmented data by adding, to the evaluation data, first noise that is perceivable for persons and evaluates resistance to the first noise based on output data acquired by inputting the first augmented data to the training model.

8. The evaluation device according to claim 7, wherein the second evaluator generates second augmented data by adding, to the evaluation data, second noise that is unperceivable for persons and evaluates resistance to the second noise based on output data acquired by inputting the second augmented data to the training model.

9. The evaluation device according to claim 2, wherein the second evaluator converts an index value, which is represented using multiple axes, calculated based on the output data into the second index value represented using one axis.

10. The evaluation device according to any one of claims 1 to 9, wherein the display controller causes the display device to display the evaluation result screen that displays an evaluation result using first evaluation data used at the time of training the training model and an evaluation result using second evaluation data, which is different from the first evaluation data, prepared at the time of a comparative evaluation of the training model in a comparable manner.

11. The evaluation device according to any one of claims 1 to 10, further comprising a notifier configured to perform notification for prompting re-training of the training model when an evaluation result of the training model is below a predetermined threshold.

12. The evaluation device according to any one of claims 1 to 11, further comprising the display device.

13. An evaluation method using a computer, the evaluation method comprising:
acquiring a training model that is an evaluation target and evaluation data;
evaluating a functional quality of the training model based on output data acquired by inputting the evaluation data to the training model;
evaluating a non-functional quality of the training model based on the output data; and
outputting an evaluation result screen including a functional first evaluation result of the training model and a non-functional second evaluation result of the training model to cause a display device to display the evaluation result screen.

14. A program causing a computer to execute:
acquiring a training model that is an evaluation target and evaluation data;
evaluating a functional quality of the training model based on output data acquired by inputting the evaluation data to the training model;
evaluating a non-functional quality of the training model based on the output data; and
outputting an evaluation result screen including a functional first evaluation result of the training model and a non-functional second evaluation result of the training model to cause a display device to display the evaluation result screen.

15. A storage medium storing a program causing a computer to execute:
acquiring a training model that is an evaluation target and evaluation data;
evaluating a functional quality of the training model based on output data acquired by inputting the evaluation data to the training model;
evaluating a non-functional quality of the training model based on the output data; and
outputting an evaluation result screen including a functional first evaluation result of the training model and a non-functional second evaluation result of the training model to cause a display device to display the evaluation result screen.
